# EUROPEAN PATENT SPECIFICATION

(11) **EP 2 523 450 B1**
(45) Date of publication and mention of the grant of the patent: **14.05.2014**
(21) Application number: 11165407.5
(22) Date of filing: 10.05.2011
(51) Int. Cl.: H04N 5/225

(54) **Handheld electronic device with dual image capturing method and computer program product**
Tragbare elektronische Vorrichtung mit dualem Bilderfassungsverfahren und Computerprogramm
Dispositif électronique portable avec procédé de capture d'image double et produit de programme informatique

(43) Date of publication of application: 14.11.2012
(73) Proprietor: HTC Corporation, Taoyuan County 330 (TW)
(72) Inventor: Huang, Chun-Hsiang, Taoyuan City Taoyuan County 330 (TW); Chang, Wen-Chi, Taoyuan City Taoyuan County 330 (TW)
(74) Representative: 2K Patentanwälte Blasberg Kewitz & Reichel

(56) References cited:
- EP-A1- 1 560 421
- EP-A1- 1 566 974
- EP-A2- 1 763 243
- WO-A1-01/31893
- US-A1- 2007 285 550
- US-A1- 2010 238 327
- US-A1- 2011 045 812

## Description

### BACKGROUND

### Technical Field

The present invention relates to an electrical device, an image capturing method and a computer program product for loading into thereof. More particularly, the present invention relates to a handheld electrical device, a dual image capturing method and a computer program product for loading into thereof.

### Description of Related Art

As 3C (Computer, Communications and Consumer) technology develops, there are more and more people utilizing handheld electrical devices in their daily life. Most common handheld electrical devices are personal digital assistants (PDA), mobile phones, smart phones etc. Since mobile electrical devices are designed much smaller and easy to carry, more and more people use handheld electrical device and more functions are developed for different users.

Nowadays, most handheld electrical devices are equipped with cameras. Wherein, images captured and output by such cameras are landscape images (or called landscape images). If users want images output vertically (as portrait images), the images must be reduced or cut since the width/length ratio of the portrait image and that of the landscape image are different. However, users may not be satisfied with the portrait images after reduce or cut. In particular, when the images captured are video, distortion of the portrait images (videos) thereof may be more obviously since the image may be further trans-coded, which may disturbs users.

US 2007/285550 provides a method and apparatus for taking images using a mobile communication terminal with a plurality of camera lenses, that can visually emphasize the shape of an object by photographing a specific object and its surrounding background using a zoom lens and a wide-angle lens, respectively, and combining the photographed images. The method includes setting the mobile communication terminal to an image-taking mode, entering into an image-combining mode, operating the plurality of camera lenses, setting an object, taking images using the plurality of camera lenses, and combining together the images obtained using the plurality of lenses. The method and apparatus enables visual emphasis of a specific object in an entire image by photographing the specific object with a zoom lens and a background containing the object with a wide-angle lens, and then combining the photographed images so as to display the specific object at a higher magnification ratio than that of the background.

US 2011/045812 relates to a device which includes a first microphone at a first position on the device, a second microphone at a second position on the device, a first speaker at a third position on the device, and a second speaker at a fourth position on the device. The first, second, third, and fourth positions of the device are different positions. The device also includes a controller configured to determine a physical characteristic of the device. The controller is further configured to select, based on the determined physical characteristic, among the first microphone at the first position on the device and the second microphone at the second position on the device. The controller is additionally configured to select, based on the determined physical characteristic, among the first speaker at the third position on the device or the second microphone at the fourth position on the device.

EP 1 763243 relates to a mobile communication terminal which comprises a first display and a second display and a user interface for allowing a user to select one or more images to be displayed on either of the first and second displays, wherein images displayed on both the first and the second display are viewable from a first viewing angle.

EP 1 560421 relates to a digital camera and a portable telephone equipped with a digital camera in which while a user views one monitor screen, the user can selectively photograph an image located in the side of the face of the user and an image located in an opposite side to the face of the user without turning out the digital camera or the portable telephone having the digital camera under a state that the user holds the digital camera or the portable telephone having the digital camera. The digital camera and the portable telephone having the digital camera of the present invention include a first camera mounted on a first surface of a casing member, a second camera mounted on a second surface in the back side of the first surface of the casing member and a camera selecting unit for selecting a photographing camera. Thus, while the user holds the portable telephone having the camera, the user can photograph the face of the user himself or herself by the first camera, can photograph a scene viewed by the user himself or herself by the second camera or can photograph both the face and the scene at the same time. Further, a synthesizing unit is provided for synthesizing the images respectively photographed by the first camera and the second camera. Accordingly, a synthesized photograph obtained by synthesizing both the images can be taken or after the images are photographed, the images can be synthesized.

WO 01/31893 relates to a mobile phone comprising a first camera (4). The invention is characterised in that it further comprises a second camera (7) with a capturing direction essentially different from the capturing direction of the first camera (4).

EP 1 566 974 relates to a multiple-image transmission method and a mobile apparatus having a multiple-image simultaneous photographing function. By rotating a second camera (4) by a hinge (5) by 180 degrees so as to obtain an opening state, the second camera 4 faces a surface side. As a result, a first camera (3) and the second camera (4) are aligned horizontally, and use the same direction as a photographing range. When the second camera (4) is rotated, a system controller determines that a state is in a stereoscopic vision photographing mode. When a camera shutter is operated by a user, both the first camera (3) and the second camera (4) are allowed to perform a photographing process, and obtained two image data are stored in a memory after being attached to information indicating that the image is for the right eye and the image is for the left eye, and etc. Then, the two image data are transmitted by an e-mail function to a terminal of a communicating partner.

US 2010/238327 relates to a dual sensor camera that uses two aligned sensors each having a separate lens of different focal length but the same f-number. The wider FOV image from one sensor is combined with the narrower FOV image from the other sensor to form a combined image. Up-sampling of the wide FOV image and down-sampling of the narrow FOV image is performed. The longer focal length lens may have certain aberrations introduced so that Extended Depth of Field (EDoF) processing can be used to give the narrow FOV image approximately the same depth of field as the wide FOV image so that a noticeable difference in depth of field is not see in the combined image.

### SUMMARY

According to one embodiment of this invention, a handheld electrical device is provided. When a user wants to utilize the handheld electrical device to capture images, the handheld electrical device controls different lens modules, image capturing boundaries of which are different, to capture images with the different image capturing boundaries at the same time. The handheld electrical device includes a first lens module with a first image capturing boundary, a second lens module with a second image capturing boundary, an input unit and a control unit. The first lens module and the second lens module are disposed on the handheld electrical device respectively. Wherein, the first image capturing boundary and the second image capturing boundary are different. The input unit is configured to receive a user input for capturing images. When the input unit receives the user Input, the control unit controls the first lens module and the second lens module to respectively capture a first image and a second image at the same time.

According to another embodiment of this invention, a dual image capturing method is provided. In the dual image capturing method, when a user wants to utilize a handheld electrical device to capture images, the handheld electrical device controls a different lens modules, image capturing boundaries of which are different, to capture images with the different image capturing boundaries at the same time. The dual image capturing method is suitable for a handheld electrical device. The hand held electrical device includes a first lens module with a first image capturing boundary and a second lens module with a second image capturing boundary. Wherein, the first image capturing boundary and the second image capturing boundary are different. The dual image capturing method can be implemented as a computer program product, which includes at least one program instruction. The at least one program instruction of the computer program product is used for being loaded into the handheld electrical device. After the at least one program instruction of the computer program product is loaded into the handheld electrical device, the handheld electrical device executes the steps of the dual image capturing method. The dual image capturing method includes the following steps: a user input for capturing images is received. When the user input is received, a first image and a second image are captured at the same time by the first lens module and the second lens module respectively.

Above all, the handheld electrical device can capture images in different image capturing boundaries at the same time without moving the handheld electrical device. Hence, when capturing images occurring in a flash, images in different image capturing boundaries can be captured to avoid missing any of the boundaries. Besides, if the images captured by the handheld electrical device are videos, the user can switch between portrait images and landscape images without too much image distortion.

These and other features, aspects, and advantages of the present invention will become better understood with reference to the following description and appended claims. It is to be understood that both the foregoing general description and the following detailed description are by examples, and are intended to provide further explanation of the invention as claimed.

### BRIEF DESCRIPTION OF THE DRAWINGS

The invention can be more fully understood by reading the following detailed description of the embodiments, with reference made to the accompanying drawings as follows:
Fig. 1 is a rear-view diagram of a handheld electrical device according to one embodiment of this invention;
Fig. 2 is a block diagram of the handheld electrical device in Fig. 1;
Fig. 3 illustrates a front-view diagram of the handheld electrical device in Fig. 1 in a portrait orientation;
Fig. 4 illustrates a front-view diagram of the handheld electrical device in Fig. 1 in a landscape orientation;
Fig. 5 illustrates an embodiment of the indication line displayed on the handheld electrical device 100 in Fig. 1;
Fig. 6 illustrates another embodiment of the indication line displayed on the handheld electrical device 100 in Fig. 1;
Fig. 7 illustrates an embodiment of the miniature displayed on the handheld electrical device 100 in Fig. 1;
Fig. 8 illustrates another embodiment of the miniature displayed on the handheld electrical device 100 in Fig. 1; and
Fig. 9 is a flow diagram of a dual image capturing method according to one embodiment of this invention.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

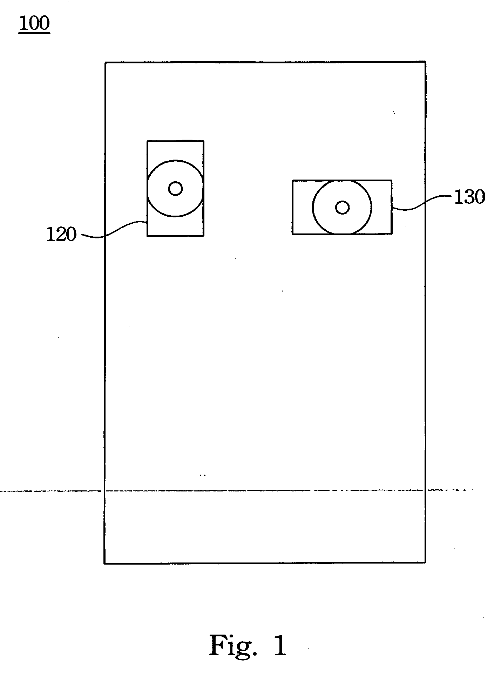

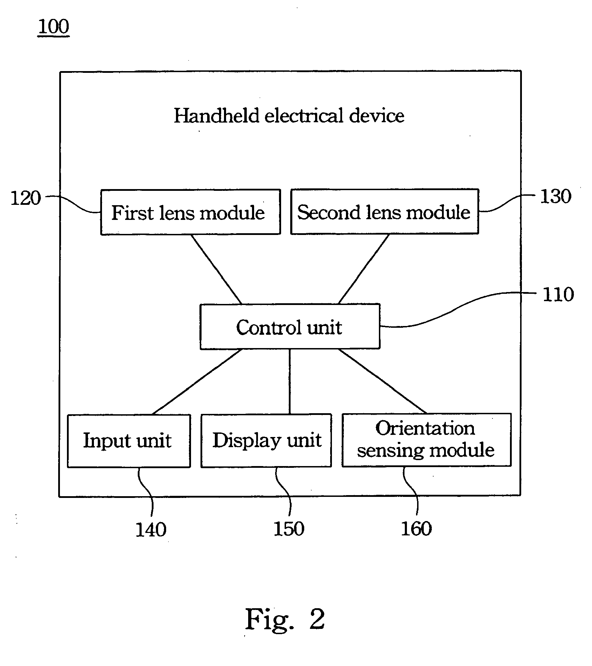

Fig. 1 is a rear-view diagram of a handheld electrical device according to one embodiment of this invention. Fig. 2 is a block diagram of the handheld electrical device in Fig. 1. When a user wants to utilize the handheld electrical device to capture images, the handheld electrical device controls different lens modules, image capturing boundaries of which are different, to capture images with the different image capturing boundaries at the same time.

The handheld electrical device 100 includes a control unit 110, a first lens module 120, a second lens module 130, and an input unit 140. The first lens module 120 and the second lens module 130 are disposed on the handheld electrical device 100 respectively. The first lens module 120, the second lens module 130, and the input unit 140 are electrically connected to the control unit 110. The input unit 140 may be at least one button, a keyboard, a graphical user interface (GUI) or other types of input units.

The first lens module 120 can capture scenes with a first image capturing boundary. The second lens module 130 can capture scenes with a second image capturing boundary. Wherein, the first image capturing boundary and the second image capturing boundary are different. The input unit 140 is configured to receive a user input for capturing images. When the input unit 140 receives the user input, the control unit 110 controls the first lens module 120 and the second lens module 130 to respectively capture a first image and a second image at the same time. Wherein, the first image and the second image may include pictures, videos or other types of image. Therefore, the handheld electrical device 100 can capture images in different image capturing boundaries at the same time without moving the handheld electrical device 100. Hence, when capturing images occurring in a flash, images in different image capturing boundaries can be captured to avoid missing any of the boundaries.

In one embodiment of this invention, the first image captured by the first lens module 120 is a portrait image (captured in a portrait mode), and the second image captured by the second lens module 130 is a landscape image (captured in a landscape mode). Hence, the disposed orientation of the first lens module 120 is substantially vertical to that of the second lens module 130. Therefore, the first image (portrait image) captured by the first lens module 120 may be substantially vertical to the second image (landscape image) captured by the second lens module 130. In other words, a portrait image and a landscape image can be captured at the same time without moving the handheld electrical device 100. In addition, when the user selects a video mode of a traditional handheld electrical device, the user can only take a landscape video. If the user wants to view the landscape video on a portrait screen, the user has to wait a long time for image trans-coding. In other words, during the trans-coding, the original coded landscape video must be decoded before encoding to a portrait video. Since the image trans-coding takes a long time, the user can't view the landscape images immediately. Besides, since the landscape images are coded twice, the landscape images may be distorted, which may lead to worse image quality. If the present invention is applied, the user can switch between portrait images and landscape images without too much image distortion.

Besides, the handheld electrical device 100 can display image captured by different lens modules with different image capturing boundaries corresponding to the orientation (such as portrait orientation or landscape orientation) of the handheld electrical device 100. Hence, the handheld electrical device 100 may further include a display unit 150 and an orientation sensing module 160. The orientation sensing module 160 is configured to sense an orientation of the handheld electrical device. Wherein, the orientation sensing module 160 may be a g sensor or any other element which can sense the orientation of the handheld electrical device 100. Hence, when the handheld electrical device 100 is in a photograph mode, the handheld electrical device 100 can control the display unit 150 to display images captured by different lens modules with different image capturing boundaries corresponding to the orientation of the handheld electrical device 100. Wherein, when the orientation sensing module 160 senses that the handheld electrical device 100 is in a first orientation, the control unit 110 controls the display unit 150 to display a scene captured by the first lens module 120 with the first image capturing boundary; when the orientation sensing module 160 senses that the handheld electrical device 100 is in a second orientation, the control unit 110 controls the display unit 150 to display another scene captured by the second lens module 130 with the second image capturing boundary. Wherein, the first orientation and the second orientation are different. Hence, when the handheld electrical device 100 is in the photograph mode, the handheld electrical device 100 can control its display unit 150 to display scenes captured by different lens modules with different image capturing boundaries in real time corresponding to the orientation of the handheld electrical device 100. In other words, when the handheld electrical device 100 is in the photograph mode, the user can change the orientation of the handheld electrical device 100 to control the handheld electrical device 100 to display scenes captured with different image capturing boundaries.

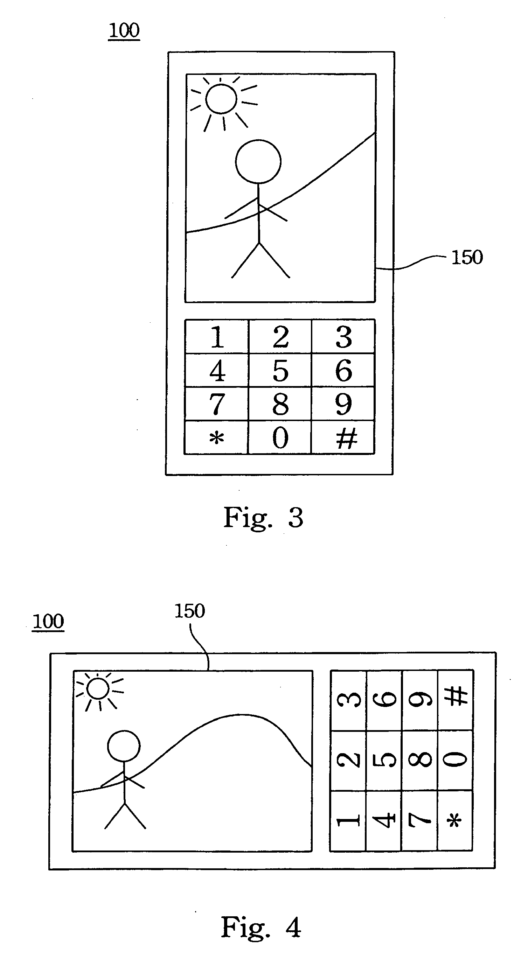

Fig. 3 illustrates a front-view diagram of the handheld electrical device in Fig. 1 in a portrait orientation. Fig. 4 illustrates a front-view diagram of the handheld electrical device in Fig. 1 in a landscape orientation. In one embodiment of this invention, the first orientation of the handheld electrical device 100 may be a portrait orientation, and the second orientation of the handheld electrical device 100 may be a landscape orientation. Hence, when the orientation sensing module 160 senses that the handheld electrical device 100 is in the portrait orientation, the control unit 110 controls the display unit 150 to display the portrait image captured by the first lens module 120 with the first image capturing boundary (as shown in Fig. 3). When the orientation sensing module 160 senses that the handheld electrical device 100 is in the landscape orientation, the control unit 110 controls the display unit 150 to display the landscape image captured by the second lens module 130 with the second image capturing boundary (as shown in Fig. 4). In other embodiments, the first orientation and the second orientation are not limited to the portrait orientation and the landscape orientation in this disclosure. Therefore, when the handheld electrical device 100 is in the photograph mode, the user can put the handheld electrical device 100 in the portrait or landscape orientation to display the portrait or landscape image correspondingly for user's convenience. Besides, the portrait image being displayed horizontally or the landscape image being displayed vertically on the display unit 150, which may waste the display area of the display unit 150, can be avoided.

When the handheld electrical device 100 displays images captured by one of the lens modules, at least one indication line to indicate the boundary of the other lens module can be displayed on the displayed images. Hence, when the handheld electrical device 100 is in the photograph mode and the orientation sensing module 160 senses that the handheld electrical device 100 is in the first orientation, the control unit 110 controls the display unit 150 to display a scene captured by the first lens module 120 with the first image capturing boundary, and to further display one or more first indication lines on the displayed scenes. Wherein the one or more first indication lines indicate the position that the second image capturing boundary captured by the second lens module 130 corresponds to the first image capturing boundary. In one embodiment of this invention, the first indication line may be a fixed position on the displayed first image capturing boundary. In another embodiment of this invention, the position of the first indication line can be obtained by comparing the scenes captured with the first image capturing boundary with that with the second image capturing boundary. However, the corresponding position of the first indication line can be obtained utilizing other methods, which should not be limited in this disclosure.

Besides, when the handheld electrical device 100 is in the photograph mode and the orientation sensing module 160 senses that the orientation of the handheld electrical device 100 is in the second orientation, the control unit 110 controls the display unit 150 to display a scene captured by the second lens module 130 with the second image capturing boundary, and to further display one or more second indication lines on the displayed scenes to indicate the first image capturing boundary captured by the first lens module 120. Therefore, when the handheld electrical device 100 displays images captured by one of the lens modules, at least one indication line to indicate the boundary of the other lens module can be displayed on the displayed images, which can help users understand the boundary captured by the other lens module.

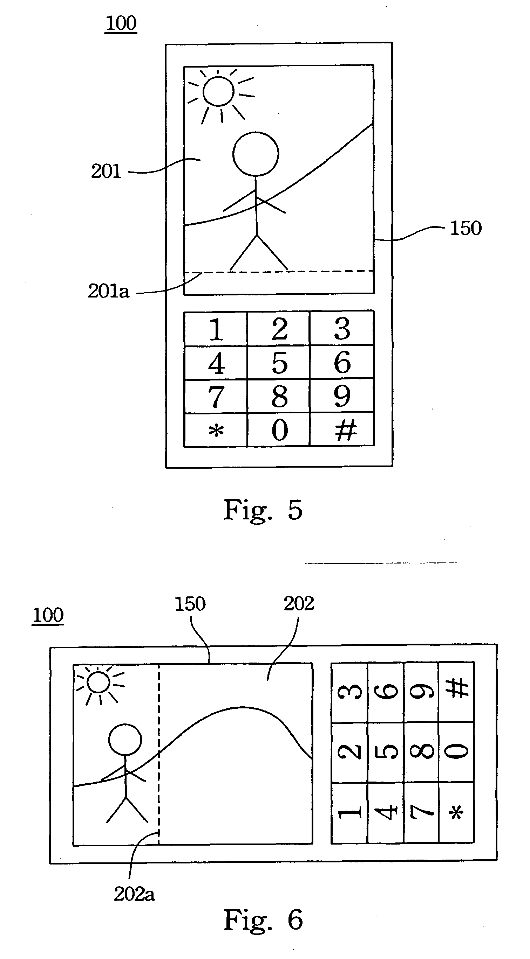

Fig. 5 illustrates an embodiment of the indication line displayed on the handheld electrical device 100 in Fig. 1. Fig. 6 illustrates another embodiment of the indication line displayed on the handheld electrical device 100 in Fig. 1. For example, the first orientation of the handheld electrical device 100 may be a portrait orientation, and the second orientation of the handheld electrical device 100 may be a landscape orientation. Hence, when the handheld electrical device 100 is in the photograph mode and the orientation sensing module 160 senses that the handheld electrical device 100 is in the portrait orientation, the control unit 110 controls the display unit 150 to display the portrait image 201 captured by the first lens module 120 with the first image capturing boundary, and to further display a first indication line 201 a (as shown in Fig. 5) on the displayed first image 201. Wherein the first indication line 201 a indicate the position that the second image capturing boundary captured by the second lens module 130 corresponds to the first image capturing boundary. Besides, when the orientation sensing module 160 senses that the handheld electrical device 100 is in the landscape orientation, the control unit 110 controls the display unit 150 to display the landscape image 202 captured by the second lens module 130 with the second image capturing boundary, and to further display one second indication line 202a on the displayed scenes (as shown in Fig. 6) to indicate the first image capturing boundary captured by the first lens module 120. Therefore, when photographing portrait images, the corresponding landscape images can be indicated; when photographing landscape images, the corresponding portrait images can be indicated, which can assist users during photographing. In other embodiments, more indication lines can be further displayed, which should not be limited in this disclosure.

When the handheld electrical device 100 displays images captured by one of the lens modules, a miniature captured by the other lens module can be further displayed. Hence, when the handheld electrical device 100 is in the photograph mode and the orientation sensing module 160 senses that the handheld electrical device is in the first orientation, the control unit 110 controls the display unit 150 to further display a first miniature captured with the second image capturing boundary. When the handheld electrical device 100 is in the photograph mode and the orientation sensing module senses that the handheld electrical device 100 is in the second orientation, the control unit 110 controls the display unit 150 to further display a second miniature captured with the first image capturing boundary. Therefore, when the handheld electrical device 100 displays images captured by one of the lens modules, users can reach the miniature captured by the other lens module with the other image capturing boundary.

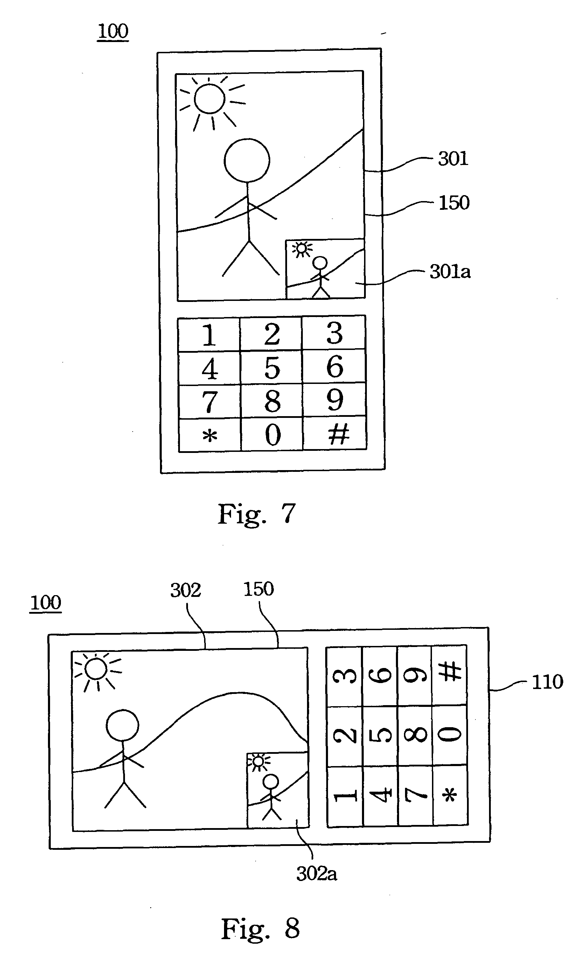

Fig. 7 illustrates an embodiment of the miniature displayed on the handheld electrical device 100 in Fig. 1. Fig. 8 illustrates another embodiment of the miniature displayed on the handheld electrical device 100 in Fig. 1. For example, the first orientation of the handheld electrical device 100 may be a portrait orientation, and the second orientation of the handheld electrical device 100 may be a landscape orientation. Hence, when the handheld electrical device 100 is in the photograph mode and the orientation sensing module 160 senses that the handheld electrical device is in the portrait orientation, the control unit 110 controls the display unit 150 to display the portrait image 301 captured by the first lens module 120 with the first image capturing boundary, and to further display a first miniature 301 a of the landscape image captured with the second image capturing boundary (as shown in Fig. 7). When the handheld electrical device 100 is in the photograph mode and the orientation sensing module 160 senses that the handheld electrical device is in the landscape orientation, the control unit 110 controls the display unit 150 to display the landscape image 302 captured by the first lens module 130 with the second image capturing boundary, and to further display a second miniature 302a of the portrait image captured with the first image capturing boundary (as shown in Fig. 8).

When the handheld electrical device 100 is in a browsing mode, the handheld electrical device 100 can display images corresponding to its orientation. Hence, when the handheld electrical device 100 is in a browsing mode and the orientation sensing module 160 senses that the handheld electrical device 100 is in the first orientation, the control unit 110 controls the display unit 150 to display the first image. When the handheld electrical device 100 is in the browsing mode and the orientation sensing module 160 senses that the handheld electrical device 100 is in the second orientation, the control unit 110 controls the display unit 150 to display the second image. Hence, when the handheld electrical device 100 is in the browsing mode, the handheld electrical device 100 can control its display unit 150 to display images captured with different image capturing boundaries corresponding to the orientation of the handheld electrical device 100. In other words, when the handheld electrical device 100 is in the browsing mode, the user can change the orientation of the handheld electrical device 100 to control the handheld electrical device 100 to display images captured with different image capturing boundaries for browsing, which is convenient to users for operation.

In addition, the handheld electrical device 100 can set the first image capturing boundary and the second image capturing boundary according to the interesting characteristics set by the user. Hence, the control unit 110 can receive an interesting characteristic through the input unit 140. The control unit 110 determines the first image capturing boundary and the second image capturing boundary automatically according to the interesting characteristic. Then, the first lens module 120 can capture the first image with the interesting characteristic according to the first image capturing boundary; the second lens module 130 can capture the second image with the interesting characteristic according to the second image capturing boundary. Wherein, the interesting characteristic may be a human facial feature, smiling feature etc.. Therefore, the interesting characteristic, which interests user, can always captured in the image.

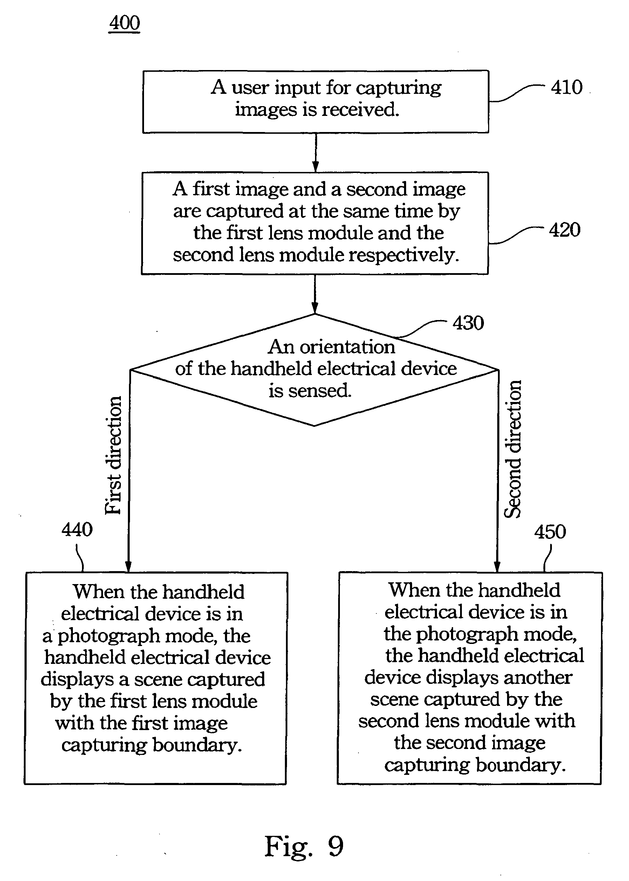

Fig. 9 is a flow diagram of a dual image capturing method according to one embodiment of this invention. In the dual image capturing method, when a user wants to utilize a handheld electrical device to capture images, the handheld electrical device controls different lens modules, image capturing boundaries of which are different, to capture images with the different image capturing boundaries at the same time. The dual image capturing method is suitable for a handheld electrical device. The handheld electrical device includes a first lens module with a first image capturing boundary and a second lens module with a second image capturing boundary. Wherein, the first image capturing boundary and the second image capturing boundary are different. The dual image capturing method can be implemented as a computer program product, which includes at least one program instruction. The at least one program instruction of the computer program product is used for being loaded into the handheld electrical device. After the at least one program instruction of the computer program product is loaded into the handheld electrical device, the handheld electrical device executes the steps of the dual image capturing method. The computer program product can be stored in a handheld-electrical-device readable storage medium. Any suitable storage medium may be used including nonvolatile memory such as read only memory (ROM), programmable read only memory (PROM), erasable programmable read only memory (EPROM), and electrically erasable programmable read only memory (EEPROM) devices; volatile memory such as SRAM, DRAM, and DDR-RAM; optical storage devices such as CD-ROMs and DVD-ROMs; and magnetic storage devices such as hard disk drives and floppy disk drives.

The dual image capturing method 400 includes the following steps:

In step 410, a user input for capturing images is received.

In step 420, when the user input is received (step 410), a first image and a second image are captured at the same time by the first lens module and the second lens module respectively. Wherein, the first image is the one captured by the first lens module with the first image capturing boundary, and the second image is the one captured by the second lens module with the second image capturing boundary. The first image and the second image may include pictures, videos or other types of image. Therefore, the handheld electrical device can capture images with different image capturing boundaries at the same time without moving the handheld electrical device.

In one embodiment of step 420, the first image, which is captured by the first lens module with the first image capturing boundary, may be a portrait image (captured in a portrait mode), and the second image, which is captured by the second lens module with the second image capturing boundary, may be a landscape image (captured in a landscape mode). Therefore, a portrait image and a landscape image can be captured at the same time without moving the handheld electrical device. In addition, when the user selects a video mode of a traditional handheld electrical device, the user can only take a landscape video. If the user wants to view the landscape video on a portrait screen, the user has to wait a long time for image trans-coding. In other words, during the trans-coding, the original coded landscape video must be decoded before encoding to a portrait video. Since the image trans-coding takes a long time, the user can't view the landscape images immediately. Besides, since the landscape images are coded twice, the landscape images may be distorted, which may lead to worse image quality. If the present invention is applied, the user can switch between portrait images and landscape images without too much image distortion.

Besides, the handheld electrical device can display image captured by different lens modules with different image capturing boundaries corresponding to the orientation (such as portrait orientation or landscape orientation) of the handheld electrical device. Hence, in step 430, an orientation of the handheld electrical device may be sensed. Wherein, the orientation of the handheld electrical device may be sensed (step 430) utilizing a g sensor or any other element which can do orientation sensing.

In step 440, when the handheld electrical device is in a first orientation and the handheld electrical device is in a photograph mode, the handheld electrical device displays a scene captured by the first lens module with the first image capturing boundary.

In step 450, when the handheld electrical device is in a second orientation and the handheld electrical device is in a photograph mode, the handheld electrical device displays another scene captured by the second lens module with the second image capturing boundary. Wherein, the first orientation and the second orientation are different. Hence, when the handheld electrical device is in the photograph mode, the handheld electrical device can display scenes captured by different lens modules with different image capturing boundaries in real time corresponding to the orientation of the handheld electrical device. Besides, the first orientation of the handheld electrical device may be a portrait orientation, the second orientation of the handheld electrical device may be a landscape orientation, the first image corresponding to the first orientation (portrait orientation) is a portrait image, and the second image corresponding to the second orientation (landscape orientation) is a landscape image. Therefore, when the handheld electrical device is in the photograph mode, the user can put the handheld electrical device in the portrait or landscape orientation correspondingly for user's convenience. Besides, the portrait image being displayed horizontally or the landscape image being displayed vertically on the display unit of the handheld electrical device, which may waste the display area of the handheld electrical device, can be avoided.

When the handheld electrical device displays images captured by one of the lens modules, at least one indication line to indicate the boundary of the other lens module can be displayed on the displayed images. Hence, when the handheld electrical device is in the photograph mode and the handheld electrical device is in the first orientation, the handheld electrical device can further display one or more first indication lines on the displayed scenes on the displayed images in step 440. Wherein the one or more first indication lines indicate the position that the second image capturing boundary captured by the second lens module corresponds to the first image capturing boundary. Besides, when the handheld electrical device is in the photograph mode and the handheld electrical device is in the second orientation, the handheld electrical device further displays one or more second indication lines on the displayed images in step 450. Wherein the one or more second indication lines indicate the position that the first image capturing boundary captured by the first lens module corresponds to the second image capturing boundary. Therefore, when the handheld electrical device displays images captured by one of the lens modules, at least one indication line to indicate the corresponding boundary of the other lens module can be displayed on the displayed images, which can help users understand the boundary captured by the other lens module.

When the handheld electrical device displays images captured by one of the lens modules, a miniature captured by the other lens module can be further displayed. Hence, when the handheld electrical device is in the photograph mode and the handheld electrical device is in the first orientation, the handheld electrical device may further display a first miniature captured with the second image capturing boundary on the images displayed in step 440. When the handheld electrical device is in the photograph mode and the handheld electrical device is in the second orientation, the handheld electrical device may further display a second miniature captured with the first image capturing boundary on the images displayed in step 450. Therefore, when the handheld electrical device displays images captured by one of the lens modules, users can reach the miniature captured by the other lens module in the other image capturing boundary.

When the handheld electrical device is in a browsing mode, the handheld electrical device can display images corresponding to its orientation. Hence, when the handheld electrical device is in the first orientation and the handheld electrical device is in the browsing mode, the handheld electrical device displays the first image captured by the first lens module. Besides, when the handheld electrical device is in the second orientation and the handheld electrical device is in the browsing mode, the handheld electrical device displays the second image captured by the second lens module. Hence, when the handheld electrical device is in the browsing mode, the handheld electrical device can display images captured with different image capturing boundaries corresponding to the orientation of the handheld electrical device.

In addition, the handheld electrical device can set the first image capturing boundary and the second image capturing boundary, which are taken as the factor to execute step 420, according to the interesting characteristics set by the user. Hence, the dual image capturing method 400 may further includes the following steps: an interesting characteristic is received. The first image capturing boundary and the second image capturing boundary are determined automatically according to the interesting characteristic, such that the image with the interesting characteristic can be captured. Wherein, the interesting characteristic may be a human facial feature, smiling feature etc.. Hence, in step 420, the first image and the second image are captured at the same time by the first lens module and the second lens module according to the first image capturing boundary and the second image capturing boundary respectively. Therefore, the interesting characteristic, which interests user, can always captured in the image.

Above all, the handheld electrical device can capture images with different image capturing boundaries at the same time without moving the handheld electrical device. Hence, when capturing images occurring in a flash, Images in different image capturing boundaries can be captured to avoid missing any of the boundaries. Besides, if the images captured by the handheld electrical device are videos, the user can switch between portrait images and landscape images without too much image distortion.

Although the present invention has been described in considerably detail with reference to certain embodiments thereof, other embodiments are possible. Therefore, the scope of the appended claims should not be limited to the description of the embodiments contained herein. It will be apparent to those spilled in the art that various modifications and variations can be made to the structure of the present invention without departing from the scope of the invention. In view of the foregoing, it is intended that the present invention cover modifications and variations of this invention provided they fall within the scope of the following claims.

## Claims

1. A handheld electrical device (100) comprising:
a first lens module (120) with a first image capturing boundary, disposed on the handheld electrical device (100);
a second lens module (130) with a second image capturing boundary, disposed on the handheld electrical device (100), wherewith the first image capturing boundary and the second image capturing boundary are different, the first lens module (120) and the second lens module (130) have same capturing direction;
an input unit (140), configured to receive a user input for capturing images; and
a control unit (110), configured to control the first lens module (120) and the second lens module (130) to respectively capture a first image and a second image at the same time when the input unit (140) receives the user input,
**characterised in that** the first image capturing boundary defines a portrait image (201; 301), the second image capturing boundary defines a landscape image (202; 302), and the disposed orientation of the first lens module (120) is substantially vertical to that of the second lens module (130).

2. The handheld electrical device of claim 1 further comprising:
a display unit (150);
an orientation sensing module (160), configured to sense an orientation of the handheld electrical device (100); and
wherein when the handheld electrical device (100) is in a photograph mode:
when the orientation sensing module (160) senses that the handheld electrical device (100) is in a first orientation, the control unit (110) controls the display unit (150) to display a scene captured by the first lens module (120) with the first image capturing boundary; and
when the orientation sensing module (160) senses that the handheld electrical device (100) is in a second orientation, the control unit (110) controls the display unit (150) to display another scene captured by the second lens module (130) with the second image capturing boundary.

3. The handheld electrical device of claim 2, wherein:
when the handheld electrical device (100) is in the photograph mode and the orientation sensing module (160) senses that the handheld electrical device (100) is in the first orientation, the control unit (110) controls the display unit (150) to further display one or more first indication lines (201 a) to indicate the second image capturing boundary; and
when the handheld electrical device (100) is in the photograph mode and the orientation sensing module (160) senses that the handheld electrical device (100) is in the second orientation, the control unit (110) controls the display unit (150) to further display one or more second indication lines (202a) to indicate the first image capturing boundary.

4. The handheld electrical device of claim 2, wherein:
when the handheld electrical device (100) is in the photograph mode and the orientation sensing module (160) senses that the handheld electrical device (100) is in the first orientation, the control unit (110) controls the display unit (150) to further display a first miniature captured by the second lens module (130) with the second image capturing boundary; and
when the handheld electrical device (100) is in the photograph mode and the orientation sensing module (160) senses that the handheld electrical device (100) is In the second orientation, the control unit (110) controls the display unit (150) to further display a second miniature captured by the first lens module (120) with the first image capturing boundary.

5. The handheld electrical device of claim 1 further comprising:
when the handheld electrical device (100) is in a browsing mode and a orieltation sensing module (160) of the handheld electrical device (100) senses that the handheld electrical device (100) is in a first orientation, the control unit (110) controls a display unit (150) of the handheld electrical device (100) to display the first image; and
when the handheld electrical device (100) is in the browsing mode and the orientation sensing module (160) senses that the handheld electrical device (100) is in a second orientation, the control unit (110) controls the display unit (150) to display the second image.

6. The handheld electrical device of claim 1, wherein the first image and the second image include pictures and/or videos.

7. A dual image capturing method of receiving (410) a user input for capturing images; and
capturing (420) a first image and a second image at the same time by a first lens module (120) and a second lens module (130), respectively, of a handheld electrical device (100), wherein the handheld electrical device (100) comprises the first lens module (120) with a first image capturing boundary and the second lens module (130) with a second image capturing boundary, wherewith the first image capturing boundary is different from the second image capturing boundary, the first lens module (120) and the second lens module(130) have same capturing direction, when the user input is received,
**characterised in that** the first image capturing boundary defines a portrait image (201; 301), the second image capturing boundary defines a landscape image (202; 302), and the disposed orientation of the first lens module (120) is substantially vertical to that of the second lens module (130).

8. The method of claim 7 further comprising:
sensing (430) an orientation of the handheld electrical device (100); and
when the handheld electrical device (100) is in a photograph mode:
when handheld electrical device (100) is in a first orientation, making the handheld electrical device (100) display (440) a scene captured by the first lens module (120) with the first image capturing boundary; and
when the handheld electrical device (100) is in a second orientation, making the handheld electrical device (100) display (450) another scene captured by the second lens module (130) with the second image capturing boundary.

9. The method of claim 8 further comprising:
when the handheld electrical device (100) is in the photograph mode and the handheld electrical device (100) is in the first orientation, further displaying one or more first indication lines (201 a) to indicate the second image capturing boundary; and
when the handheld electrical device (100) is in the photograph mode and the handheld electrical device (100) is in the second orientation, further displaying one or more second indication lines (202a) to indicate the first image capturing boundary.

10. The method of claim 8 further comprising:
when the handheld electrical device (100) is in the photograph mode and the handheld electrical device (100) is in the first orientation, further displaying a first miniature captured by the second lens module (130) with the second image capturing boundary; and
when the handheld electrical device (100) is in the photograph mode and the handheld electrical device (100) is in the second orientation, further displaying a second miniature captured by the first lens module (120) with the first image capturing boundary.

11. The method of claim 7 further comprising:
when the handheld electrical device (100) is in a browsing mode and the handheld electrical device (100) is in a first orientation, displaying the first image; and
when the handheld electrical device (100) is in the browsing mode and the handheld electrical device (100) is in a second orientation, displaying the second image.

12. The method of claim 7, wherein the first image and the second image include pictures and/or videos.

13. A computer program comprising at least one program instruction for being loaded into a handheld electrical device (100), wherein the handheld electrical device (100) comprises a first lens module (120) with a first image capturing boundary and a second lens module (130) with a second image capturing boundary, wherewith the first image capturing boundary is different from the second image capturing boundary, the first lens module (120) and the second lens module(130) have same capturing direction, wherein the at least one program instruction executes at least following steps after loading into the handheld electrical device (100):
receiving (410) a user input for capturing images; and
capturing (420) a first image and a second image at the same time by the first lens module (120) and the second lens module (130) respectively when the user input is received,
**characterised in that** the first image capturing boundary defines a portrait image (201; 301), the second image capturing boundary defines a landscape image (202; 302), and the disposed orientation of the first lens module (120) is substantially vertical to that of the second lens module (130).

## Patentansprüche

1. Tragbare elektronische Vorrichtung (100), umfassend:
ein erstes Linsenmodul (120) mit einer ersten Bildaufnahme-Begrenzung, das an der tragbaren elektronischen Vorrichtung (100) angeordnet ist;
ein zweites Linsenmodul (130) mit einer zweiten Bildaufnahme-Begrenzung, das an der tragbaren elektronischen Vorrichtung (100) angeordnet ist, womit die erste Bildaufnahme-Begrenzung und die zweite Bildaufnahme-Begrenzung verschieden sind, und das erste Linsenmodul (120) und das zweite Linsenmodul (130) dieselbe Aufnahmerichtung aufweisen;
eine Eingabeeinheit (140), die beschaffen ist, eine Benutzereingabe für die Aufnahme von Bildern zu empfangen; und
eine Steuerungseinheit (110), die beschaffen ist, das erste Linsenmodul (120) und das zweite Linsenmodul (130) zu steuern, um ein erstes Bild bzw. ein zweites Bild gleichzeitig zu erfassen, wenn die Eingabeeinheit (140) die Benutzereingabe empfängt,
**dadurch gekennzeichnet, dass** die erste Bildaufnahme-Begrenzung ein Hochformatbild (201, 301) definiert, die zweite Bildaufnahme-Begrenzung ein Querformatbild (202, 302) definiert, und die angeordnete Ausrichtung des ersten Linsenmoduls (120) im Wesentlichen vertikal zu der des zweiten Linsenmoduls (130) ist.

2. Tragbare elektronische Vorrichtung nach Anspruch 1, ferner umfassend:
eine Anzeigeeinheit (150);
ein Ausrichtungs-Erfassungsmodul (160), das beschaffen ist, eine Ausrichtung der tragbaren elektronischen Vorrichtung (100) zu erfassen, und
wobei, wenn die tragbare elektronische Vorrichtung (100) In einem Fotografie-Modus ist, wenn das Ausrichtungs-Erfassungsmodul (160) erfasst, dass die tragbare elektronische Vorrichtung (100) in einer ersten Ausrichtung ist, die Steuerungseinheit (110) die Anzeigeeinheit (150) steuert, um eine Szene, die von dem ersten Linsenmodul (120) mit der ersten Bildaufnahme-Begrenzung aufgenommen wird, anzuzeigen; und
wenn das Ausrichtungs-Erfassungsmodul (160) erfasst, dass die tragbare elektronische Vorrichtung (100) in einer zweiten Ausrichtung ist, die Steuerungseinheit (110) die Anzeigeeinheit (150) steuert, um eine andere Szene, die von dem zweiten Linsenmodul (130) mit der zweiten Bildaufnahme-Begrenzung aufgenommen wird, anzuzeigen.

3. Tragbare elektronische Vorrichtung nach Anspruch 2, wobei:
wenn sich die tragbare elektronische Vorrichtung (100) in dem Fotografie-Modus befindet und das Ausrichtungs-Erfassungsmodul (160) erfasst, dass die tragbare elektronische Vorrichtung (100) sich in der ersten Ausrichtung befindet, die Steuerungseinheit (110) die Anzeigeeinheit(150) steuert, um ferner eine oder mehrere erste Markierungslinien (201 a) anzuzeigen, um die zweite Bildaufnahme-Begrenzung anzuzeigen, und
wenn die tragbare elektronische Vorrichtung (100) sich in dem Fotografie-Modus befindet und das Ausrichtungs-Erfassungsmodul (160) erfasst, dass die tragbare elektronische Vorrichtung (100) sich in der zweiten Ausrichtung befindet, die Steuerungseinheit (110) die Anzeigeeinheit(1 50) steuert, um ferner ein oder mehrere zweite Markierungslinien (202a) anzuzeigen, um die erste Bildaufnahme-Begrenzung anzuzeigen.

4. Tragbare elektronische Vorrichtung nach Anspruch 2, wobei:
wenn sich die tragbare elektronische Vorrichtung (100) in dem Fotografie-Modus befindet und das Ausrichtungs-Erfassungsmodul (160) erfasst, dass die tragbare elektronische Vorrichtung (100) sich in der ersten Ausrichtung befindet, die Steuerungseinheit (110) die Anzeigeeinheit(150) steuert, um ferner ein erstes Miniaturbild anzuzeigen, das durch das zweite Linsenmodul (130) mit der zweiten Bildaufnahme-Begrenzung aufgenommen wird, und
wenn die tragbare elektronische Vorrichtung (100) sich in dem Fotografie-Modus befindet und das Ausrichtungs-Erfassungsmodul (160) erfasst, dass sich die tragbare elektronische Vorrichtung (100) in der zweiten Ausrichtung befindet, die Steuerungseinheit (110) die Anzeigeeinheit(150) steuert, um ferner ein zweites Miniaturbild anzuzeigen, das durch das erste Linsenmodul (130) mit der ersten Bildaufnahme-Begrenzung aufgenommen wird.

5. Tragbare elektronische Vorrichtung nach Anspruch 1, ferner umfassend:
wenn sich die tragbare elektronische Vorrichtung (100) in einem Browser- bzw. Such-Modus befindet und das Ausrichtungs-Erfassungsmodul (160) der tragbaren elektronischen Vorrichtung (100) erfasst, dass sich die tragbare elektronische Vorrichtung (100) in einer ersten Ausrichtung befindet, die Steuerungseinheit (110) eine Anzeigeeinheit (150) der tragbaren elektronischen Vorrichtung (100) steuert, um das erste Bild anzuzeigen, und
wenn sich die tragbare elektronische Vorrichtung (100) in dem Fotografie-Modus befindet und das Ausrichtungs-Erfassungsmodul (160) erfasst, dass sich die tragbare elektronische Vorrichtung (100) in der zweiten Ausrichtung befindet, die Steuerungseinheit (110) die Anzeigeeinheit (150) steuert, um das zweite Bild anzuzeigen.

6. Tragbare elektronische Vorrichtung nach Anspruch 1, wobei das erste Bild und das zweite Bild Bilder und/oder Videos mit umfassen.

7. Duales Bilderfassungs-Verfahren mit Empfangen (410) einer Benutzereingabe zum Erfassen von Bildern, und Erfassen (420) eines ersten Bildes und eines zweiten Bildes zur gleichen Zeit durch ein erstes Linsenmodul (120) und ein zweites Linsenmodul (130) einer tragbaren elektronischen Vorrichtung (100), wobei die tragbare elektronische Vorrichtung (100) das erste Linsenmodul (120) mit einer ersten Bildaufnahme-Begrenzung und das zweite Linsenmodul (130) mit einer zweiten Bildaufnahme-Begrenzung umfasst,
womit die erste Bildaufnahme-Begrenzung von der zweiten Bildaufnahme-Begrenzung verschieden ist, und das erste Linsenmodul (120) und das zweite Linsenmodul (130) dieselbe Aufnahmerichtung aufweisen, wenn die Benutzereingabe empfangen wird;
**dadurch gekennzeichnet, dass** die erste Bildaufnahme-Begrenzung ein Hochformatbild (201, 301) definiert, die zweite Bildaufnahme-Begrenzung ein Querformatbild (202, 302) definiert, und die angeordnete Ausrichtung des ersten Linsenmoduls (120) im Wesentlichen vertikal zu der des zweiten Linsenmoduls (130) ist.

8. Verfahren nach Anspruch 7, ferner umfassend:
Erfassen (430) einer Ausrichtung der tragbaren elektronischen Vorrichtung (100), und
wenn sich die tragbare elektronische Vorrichtung (100) in einem Fotografie-Modus befindet:
wenn sich die tragbare elektronische Vorrichtung (100) in einer ersten Ausrichtung befindet, wird die tragbare elektronische Vorrichtung (100) befähigt, eine Szene anzuzeigen (400), die von dem ersten Linsenmodul (120) mit der ersten Bildaufnahme-Begrenzung aufgenommen wird; und wenn sich die tragbare elektronische Vorrichtung (100) in einer zweiten Ausrichtung befindet, wird die tragbare elektronische Vorrichtung (100) befähigt, eine andere Szene anzuzeigen (450), die von dem zweiten Linsenmodul (130) mit der zweiten Bildaufnahme-Begrenzung aufgenommen wird.

9. Verfahren nach Anspruch 8, ferner umfassend:
wenn sich die tragbare elektronische Vorrichtung (100) in dem Fotografie-Modus befindet und sich die tragbare elektronische Vorrichtung (100) in der ersten Ausrichtung befindet, wird bzw. werden ferner eine oder mehrere erste Markierungslinien (201a) angezeigt, um die zweite Bildaufnahme-Begrenzung anzuzeigen, und
wenn sich die tragbare elektronische Vorrichtung (100) in dem Fotografie-Modus befindet und sich die tragbare elektronische Vorrichtung (100) in einer zweiten Ausrichtung befindet, wird bzw. werden ferner ein oder mehrere zweite Markierungslinien (202a) angezeigt, um die erste Bildaufnahme-Begrenzung anzuzeigen.

10. Verfahren nach Anspruch 8, ferner umfassend:
wenn sich die tragbare elektronische Vorrichtung (100) in dem Fotografie-Modus befindet und sich die tragbare elektronische Vorrichtung (100) in der ersten Ausrichtung befindet, wird ferner ein erstes Miniaturbild angezeigt, das durch das zweite Linsenmodul (130) mit der zweiten Bildaufnahme-Begrenzung aufgenommen wird, und
wenn sich die tragbare elektronische Vorrichtung (100) in dem Fotografie-Modus befindet und sich die tragbare elektronische Vorrichtung (100) in der zweiten Ausrichtung befindet, wird ferner ein zweites Miniaturbild angezeigt, das durch das erste Linsenmodul (130) mit der ersten Bildaufnahme-Begrenzung aufgenommen wird.

11. Verfahren nach Anspruch 7, ferner umfassend:
wenn sich die tragbare elektronische Vorrichtung (100) in einem Browser- bzw. Such-Modus befindet und sich die tragbare elektronische Vorrichtung (100) in einer zweiten Ausrichtung befindet, wird das erste Bild angezeigt, und
wenn sich die tragbare elektronische Vorrichtung (100) in dem Fotografie-Modus befindet und sich die tragbare elektronische Vorrichtung (100) in der zweiten Ausrichtung befindet, wird das zweite Bild angezeigt.

12. Verfahren nach Anspruch 7, wobei das erste Bild und das zweite Bild Bilder und/oder Videos mit umfassen.

13. Computerprogramm, das mindestens einen Programmbefehl umfasst, um in eine tragbare elektronische Vorrichtung (100) geladen zu werden, wobei die tragbare elektronische Vorrichtung (100) ein erstes Linsenmodul (120) mit einer ersten Bildaufnahme-Begrenzung und ein zweites Linsenmodul (130) mit einer zweiten Bildaufnahme-Begrenzung umfasst, womit die erste Bildaufnahme-Begrenzung von der zweiten Bildaufnahme-Begrenzung verschieden ist, und das erste Linsenmodul (120) und das zweite Linsenmodul (130) dieselbe Aufnahmerichtung aufweisen, wobei der mindestens eine Programmbefehl zumindest die folgenden Schritte nach dem Laden in die eine tragbare elektronische Vorrichtung (100) ausführt:
Empfangen (410) einer Benutzereingabe zur Aufnahme von Bildern; und Aufnehmen bzw. Erfassen (420) eines ersten Bildes und eines zweiten Bildes zur gleichen Zeit durch das erste Linsenmodul (120) und das zweite Linsenmodul (130), wenn die Benutzereingabe empfangen wird;
**dadurch gekennzeichnet, dass** die erste Bildaufnahme-Begrenzung ein Hochformatbild (201, 301) definiert, die zweite Bildaufnahme-Begrenzung ein Querformatbild (202, 302) definiert, und die angeordnete Ausrichtung des ersten Linsenmoduls (120) im Wesentlichen vertikal zu der des zweiten Linsenmoduls (130) ist.

## Revendications

1. Un dispositif électrique portable (100) comprenant :
un premier module de lentille (120) ayant une première frontière de capture d'image, disposé sur le dispositif électrique portable (100) ;
un second module de lentille (130) ayant une seconde frontière de capture d'image, disposé sur le dispositif électrique portable (100), dans lequel la première frontière de capture d'image et la seconde frontière de capture d'image sont distinctes, le premier module de lentille (120) et le second module de lentille (130) ayant une même direction de capture ;
une unité de saisie (140), configuré pour recevoir une saisie d'utilisateur pour la capture d'images ; et
une unité de commande (110), configurée pour commander le premier module de lentille (120) et le second module de lentille (130) pour respectivement capturer une première image et un seconde image au même moment lorsque l'unité de saisie (140) reçoit la saisie de l'utilisateur,
**caractérisé en ce que** la première frontière de capture d'image est une image en portrait (201 ; 301), la seconde frontière de capture d'image est une image en mode paysage (202 ; 302), et l'orientation du premier module de lentille (120) est substantiellement vertical par rapport au second module de lentille (130).

2. Le dispositif électrique portable (100) de la revendication 1 comprenant en outre :
une unité d'affichage (150) ;
un module de détection d'orientation (160), configuré pour détecter l'orientation du dispositif électrique portable (100) ; et
dans lequel lorsque le dispositif électrique portable (100) est en mode photographique:
lorsque le module de capture d'orientation (160) détecte que le dispositif électrique portable (100) est dans une première orientation, l'unité de commande (110) commande l'unité d'affichage (150) pour afficher une scène capturée par le premier module de lentille (120) avec la première frontière de capture d'image ; et
lorsque le module de capture d'orientation (160) détecte que le dispositif électrique portable (100) est dans une seconde orientation, l'unité de commande (110) commande l'unité d'affichage (150) pour afficher une autre scène capturée par le second module de lentille (130) avec la seconde frontière de capture d'image.

3. Le dispositif électrique portable de la revendication 2, dans lequel :
lorsque le dispositif électrique portable (100) est en mode photographique et que le module de détection de l'orientation (160) détecte que le dispositif électrique portable (100) est dans la première orientation, l'unité de commande (110) commande l'unité d'affichage (150) pour afficher en outre une ou plusieurs lignes indicatives (201a) pour indique la seconde frontière de capture d'image ; et
lorsque le dispositif électrique portable (100) est en mode photographique et que le module de détection de l'orientation (160) détecte que le dispositif électrique portable (100) est dans la seconde orientation, l'unité de commande (110) commande l'unité d'affichage (150) pour afficher en outre une ou plusieurs lignes indicatrices (202a) pour indiquer la première frontière de capture d'image.

4. Le dispositif électrique portable de la revendication 2, dans lequel :
lorsque le dispositif électrique portable (100) est en mode photographique et que le module de détection de l'orientation (160) détecte que le dispositif électrique portable (100) est dans la première orientation, l'unité de commande (110) commande l'unité d'affichage (150) pour afficher en outre une première miniature capturée par le second module de lentille (130) avec la seconde frontière de capture d'image ; et
lorsque le dispositif électrique portable (100) est en mode photographique et que le module de détection de l'orientation (160) détecte que le dispositif électrique portable (100) est dans la seconde orientation, l'unité de commande (110) commande l'unité d'affichage (150) pour afficher en outre une seconde miniature capturée par le premier module de lentille (120) avec la première frontière de capture d'image.

5. Le dispositif électrique portable de la revendication 1, comprenant en outre :
lorsque le dispositif électrique portable (100) est en mode d'explorateur et que le module de détection de l'orientation (160) du dispositif électrique portable (100) détecte que le dispositif électrique portable (100) est dans une première orientation, l'unité de commande (110) commande l'unité d'affichage (150) du dispositif électrique portable (100) pour afficher la première image ; et
lorsque le dispositif électrique portable (100) est en mode d'explorateur et que le module de détection de l'orientation (160) du dispositif électrique portable (100) détecte que le dispositif électrique portable (100) est dans une seconde orientation, l'unité de commande (110) commande l'unité d'affichage (150) pour afficher la seconde image.

6. Le dispositif électrique portable de la revendication 1, dans lequel la première image et la seconde image comporte des photos et/ou des vidéos.

7. Une méthode de capture d'images duales par la réception (410) d'une entrée d'utilisateur pour la capture d'images ; et
la capture (420) d'une première image et d'une seconde image au même instant au moyen d'un premier module de lentille (120) et d'un second module de lentilles (130), respectivement, au sein d'un dispositif électrique portable (100), dans lequel le dispositif électrique portable (100) comporte un premier module de lentille (120) ayant une première frontière de capture d'image et le second module de lentilles (130) ayant une seconde frontière de capture d'image, dans la laquelle la première frontière de capture d'images est distincte de la seconde frontière de capture d'image, le premier module de lentilles (120) et le second module de lentilles (130) ayant la même direction de capture, lorsque la saisie utilisateur est reçue,
**caractérisée en ce que** la première frontière de capture d'image définit une image en mode portrait (201, 301), la seconde frontière de capture d'image définit une image en mode paysage (202 ; 302), et l'orientation du premier module de lentille (120) est substantiellement vertical relativement au premier module de lentille (130).

8. La méthode de la revendication 7 comprenant en outre :
la détection (430) d'une orientation du dispositif électrique portable (100) ; et
lorsque le dispositif électrique portable est en mode photographie :
lorsque le dispositif électrique portable (100) est dans une première orientation, provoquant l'affichage par le dispositif électrique portable (100) d'une scène capturée par le premier module de lentille (120) avec la première frontière de capture d'image ; et
lorsque le dispositif électrique portable (100) est dans une seconde orientation, provoquant l'affichage par le dispositif électrique portable (100) d'une autre scène capturée par le second module de lentille (130) avec la seconde frontière de capture d'image.

9. La méthode de la revendication 8, comprenant en outre :
lorsque le dispositif électrique portable (100) est en mode photographique et que le dispositif électrique portable (100) est dans la première orientation, l'affichage supplémentaire d'une ou plusieurs lignes indicatives (201a) pour indique la seconde frontière de capture d'image ; et
lorsque le dispositif électrique portable (100) est en mode photographique et que le dispositif électrique portable (100) est dans la seconde orientation, l'affichage supplémentaire d'une ou plusieurs lignes indicatrices supplémentaires (202a) pour indiquer la première frontière de capture d'image.

10. La méthode de la revendication 8, comprenant en outre :
lorsque le dispositif électrique portable (100) est en mode photographique et que le dispositif électrique portable (100) est dans la première orientation, l'affichage supplémentaire d'une première miniature capturée par le second module de lentille (130) avec la seconde frontière de capture d'image ; et
lorsque le dispositif électrique portable (100) est en mode photographique et que le dispositif électrique portable (100) est dans la seconde orientation, l'affichage supplémentaire d'une seconde miniature capturée par le premier module de lentille (120) avec la première frontière de capture d'image.

11. La méthode de la revendication 7 comprenant en outre :
lorsque le dispositif électrique portable (100) est en mode d'explorateur et que le dispositif électrique portable (100) est dans une première orientation, l'affichage de la première image ; et
lorsque le dispositif électrique portable (100) est en mode d'explorateur et que le dispositif électrique portable (100) est dans une seconde orientation, l'affichage de la seconde image.

12. La méthode de la revendication 7, dans laquelle la première image et la seconde image sont des photographies et/ou des vidéos.

13. Un programme d'ordinateur comprenant au moins une instruction de programme devant être chargée dans un dispositif électrique portable (100), dans lequel le dispositif électrique portable (100) comporte un premier module de lentille (120) ayant une première frontière de capture d'images et un second module de lentille (130) ayant une seconde frontière de capture d'images, dans lequel la première frontière de capture d'images est distincte de la seconde frontière de capture d'images, le premier module de lentille (120) et le second module de lentille (130) ayant les mêmes directions de capture, dans lequel au moins une instruction de programme exécute à tout le moins les étapes suivantes une fois chargée au sein du dispositif électrique portable (100) :
la capture (410) d'une saisie utilisateur pour la capture d'images ; et
la capture (420) d'une première image et d'une seconde image au même instant au moyen du premier module de lentille (120) et du second module de lentilles (130) respectivement lors de la réception de la saisie utilisateur,
**caractérisée en ce que** la première frontière de capture d'image définit une image en mode portrait (201, 301), la seconde frontière de capture d'image définit une image en mode paysage (202 ; 302), et l'orientation du premier module de lentille (120) est substantiellement vertical relativement au premier module de lentille (130).
